Europäisches Patentamt

**European Patent Office**

**Office européen des brevets**

(11) Veröffentlichungsnummer: **0 190 387**

**A2**

(12) **EUROPÄISCHE PATENTANMELDUNG**

(21) Anmeldenummer: **85103216.9**

(22) Anmeldetag: **20.03.85**

(51) Int. Cl.⁴: **G 07 F 7/08**
**G 06 K 19/08**

(30) Priorität: 07.02.85 DE 3504109

(43) Veröffentlichungstag der Anmeldung:
13.08.86 Patentblatt 86/33

(84) Benannte Vertragsstaaten:
AT BE CH DE FR GB IT LI LU NL SE

(71) Anmelder: MIDS Magnetische Informations- und
Datensysteme GmbH
Forellstrasse 120
D-4690 Herne 1(DE)

(72) Erfinder: Diekemper, Erwin, Dipl.-Betriebswirt (FH)
Kiefernstrasse 7
D-4830 Gütersloh(DE)

(72) Erfinder: Kastrup, Dieter
Elbrachtsweg 65
D-4830 Gütersloh 1(DE)

(74) Vertreter: Herrmann-Trentepohl, Werner,
Dipl.-Ing. et al,
Schaeferstrasse 18
D-4690 Herne 1(DE)

(54) **Ausweiskarte mit Codierung.**

(57) Bei einer Ausweiskarte mit Codierung, die aus einer Mehrzahl von Markierungen besteht, welche bei Infrarotbestrahlung auf einem Infrarotempfänger erscheinen, ist erfindungsgemäß zur Vermeidung von Falsifikaten vorgesehen, daß eine kontinuierlicher und transparenter Kunststofffolienausschnitt (4) wenigstens auf einem Teil seiner Oberfläche eine für sichtbares Licht undurchlässige und für Infrarotlicht durchlässige Schicht (4a) trägt und mit einem Träger (5) ein Laminat bildet, welches auf seiner Innenseite eine von der für infrarotes Licht durchlässigen Schicht überdeckte strahlungsempfindliche Schicht (7) trägt, auf der die Markierungen (21-23) durch Bestrahlung des Kunststofffolienabschnittes (3, 4) als Negativ oder Positiv erscheinen.

FIG.1

0190387

4690 Herne 1,
Schulerstraße 18
Postfach 1140
Pat.-Anw. Herrmann-Trentepohl
Fernsprecher: 0 23 23 / 5 10 13
5 10 14
Telegrammanschrift:
Bahrpatente Herne
Telex 08 229 853

Dipl.-Ing. R. H. Bahr (1931-1981)
Dipl.-Phys. Eduard Betzler
Dipl.-Ing. W. Herrmann-Trentepohl
Dipl.-Ing. Josef Bockhorni
PATENTANWÄLTE
PROFESSIONAL REPRESENTATIVES
BEFORE THE EUROPEAN PATENT OFFICE

8000 München 10
Plinyanselstr. 18a
Postfach 70 02 09
Pat.-Anw. Betzler
Pat.-Anw. Bockhorni
Fernsprecher: 089 / 7 25 40 63
7 25 40 64
7 25 40 65
Telegrammanschrift:
Babetzpat München
Telex 5 215 360
Telefax 089 / 79 59 88

Bankkonten:
Bayerische Vereinsbank München 952 287
BLZ 700 202 70
Dresdner Bank AG Herne 7-520 499
BLZ 432 800 84
Postgirokonto Dortmund 558 68-467
BLZ 440 100 46

Ref.: A 31 815 X/Ko
In der Antwort bitte angeben

Zuschrift bitte nach:

H e r n e  1

MIDS Magnetische Informations- und Daten-Systeme GmbH,
Forellstr. 120, D-4690 Herne 1

---

"Ausweiskarte mit Codierung"

---

Die Erfindung betrifft eine Ausweiskarte mit Codierung
gemäß dem Oberbegriff des Anspruches 1.

Die Ausweiskarten gemäß der Erfindung teilen dem Karteninhaber ein nicht ohne weiteres entschlüsselbares Codewort zu, mit dem entweder nur der Karteninhaber oder eine
Mehrzahl von Karteninhabern, denen das gleiche Codewort
zugeteilt worden ist sich nach Maßgabe der Auslesung des
betreffenden Codewortes durch den Infrarotempfänger Zugang zu einer Einrichtung verschaffen, die nur mit dem
richtigen Codewort entsperrbar ist, was den Besitz der
betreffenden Ausweiskarte voraussetzt. Die Benutzung
des infraroten Lichtes zur Entschlüsselung des Codes verhindert Mißbräuche durch die Ausschaltung der kurzwelligen Strahlung des sichtbaren Lichtes. Außerdem sind die verfügbaren technischen Infrarotstrahlungsquellen und -empfänger auch bei der geforderten Leistungsfähigkeit so klein, daß sie sich zusammen mit elektronischen Schaltungen verwenden, z.B. in Türschlösser einbauen lassen.

Ein Beispiel für die praktische Anwendung der Erfindung sind deswegen sogenannte Schlüsselkarten, die statt metallischer Schlüssel an Hotelgäste ausgegeben werden und mit denen das Schloß eines Hotelzimmers geöffnet wird. Diese Schlüsselkarten sind unvergleichlich billiger als die üblichen Zimmerschlüssel und vermeiden deswegen die sehr erheblichen finanziellen Verluste, welche den Hoteliers u.a. dadurch entstehen, daß Hotelgäste absichtlich oder irrtümlich ihre Zimmerschlüssel nicht zurückgeben, sondern mitnehmen oder verlieren. In diesen Fällen genügt es nämlich in aller Regel nicht, den verlorengegangenen Schlüssel zu ersetzen und das meistens versperrte Schloß des betreffenden Hotelzimmers von einem Schlosser öffnen zu lassen. Es ist vielmehr notwendig, das geöffnete Schloß auszubauen und es durch ein neues Schloß zu ersetzen, um dadurch nachfolgende Mißbräuche zu vermeiden. Verwendet der Hotelier dagegen Schlüsselkarten, so stellt deren Verlust praktisch keine finanzielle Einbuße dar. Zudem sind die Türschlösser so ausgebildet, daß sie sich auf geänderte Codeworte umstellen lassen. Dadurch erübrigt sich der Ersatz des Schlosses bei verlorener Schlüsselkarte.

Die Erfindung geht von einer vorbekannten Ausweiskarte aus, welche u.a. in einem System der vorstehend beschriebenen speziellen Art Verwendung findet. Der Code besteht hierbei aus einer Folge von Perforationen der Karte, durch die im Schloß die Strahlung eines eingebauten Infrarotstrahlers auf einen Empfänger fällt, der mit einer elektronischen Schaltung den Code entschlüsselt und danach das Schloß öffnet oder zuhält. Allerdings können mit diesen Schlüsselkarten Mißbräuche nicht ausgeschlossen werden. Denn der Lochcode ist sichtbar und läßt sich ohne Kenntnis des Codewortes von einem Fälscher leicht auf ein Falsifikat übertragen, das nur aus einem entsprechend perforierten Folienabschnitt zu bestehen braucht.

Der Erfindung liegt die Aufgabe zugrunde, ohne Änderung des beschriebenen, d.h. im wesentlichen aus Infrarotstrahler und -empfänger aufgebauten Systems und auf einfache Weise solche Mißbräuche auszuschließen, die sich aus dem einfachen Aufbau der bekannten Ausweiskarte für Fälscher ergeben.

Gemäß der Erfindung wird diese Aufgabe mit den Merkmalen des Anspruches 1 gelöst. Zweckmäßige Ausführungsformen der Erfindung sind Gegenstand der Unteransprüche.

Gemäß der Erfindung wird der Code bzw. das hieraus bestehende Codewort unter Umgehung oder Durchstrahlung der für sichtbares Licht undurchlässigen, aber für Infrarotlicht durchlässigen Schicht mit der Strahlung, für die die bedeckende Schicht durchlässig ist, z.B. mit Hilfe von ultraviolettem Licht auf der Ausweiskarte angebracht. Die Überdeckung mit der für sichtbares Licht undurchlässigen Schicht, die deswegen in der Regel dunkel bis schwarz ist, macht den Code insbesondere bei Beleuchtung mit Tageslicht unleserlich. Im infraroten Licht, für das die Schicht durchlässig ist, erzeugt der Code mit der elektronischen Schaltung die Signale, welche erst das Codewort ergeben, das deswegen wie bekannt ausgelesen wird. Da der Code insbesondere durch Belichtung der in der Karte untergebrachten, strahlungsempfindlichen Schicht festgehalten wird, ist diese ohne Zerstörung der Karte nicht zugänglich, kann aber andererseits nur zusammen mit der Karte verwendet werden. Das Codewort ist deswegen nicht zu entschlüsseln. Außerdem muß man auch über die Belichtungseinrichtung verfügen, mit der der Code auf der strahlungsempfindlichen Schicht angebracht wird. Daher sind Falsifikate der erfindungsgemäßen Ausweiskarte nicht herstellbar.

Laminierte Ausweiskarten sind aus unterschiedlichen Verwendungen bekannt und sind in der Regel aus mehreren Schichten, die miteinander verbunden sind, zusammengesetzt und zwar derart, daß diese nach Verbindung der einzelnen Schichten miteinander nicht wieder getrennt oder gar erneut zusammengefügt werden können, ohne die Karte zu zerstören bzw. zu entwerten. Damit ist dem Fälscher auch die Möglichkeit genommen, Teile der Originalkarte für ein Falsifikat zu verwenden.

Die Erfindung ermöglicht es, ohne Systemänderung die bereits genutzten Empfänger und Strahler weiter zu benutzen, welche das Codewort entschlüsseln. In Hotels können daher die bereits vorhandenen Schlösser unverändert oder mit nur relativ leicht vorzunehmenden, elektronischen Korrekturen beibehalten werden. Lediglich die Übertragung der Codeworte auf die einzelnen Ausweiskarten erfordert Geräte, welche auf die Markierung der strahlungsempfindlichen Schicht eingerichtet sind. Da die erfindungsgemäße Karte aus mehreren Schichten besteht, bietet sie auch die damit verbundenen erweiterten Möglichkeiten gegenüber Karten, welche lediglich aus einem Kunststoffolienausschnitt bestehen. Insbesondere läßt sich die Karte auf beiden Seiten glatt ausbilden und zusätzlich bedrucken, wobei die Bedruckung auch mit einem sogenannten Overlay geschützt werden kann. Diese Möglichkeiten werden durch die Erfindung nicht beeinträchtigt, weil die strahlungsempfindliche Schicht nur dort benötigt wird, wo bereits bei den bekannten Karten das Codewort angebracht werden muß.

Mit den Merkmalen des Anspruches 2 läßt sich die Codierung in den Karten durch flächen- oder punktförmige Strahler, deren Strahlungsschwerpunkt zweckmäßig in einer definierten Ebene der Karte liegen sollte, trotz geringer optischer Qualität des Kunststoffolienausschnittes verzeichnungsfrei aufbringen, weil die Strahlung weder im einzelnen noch in Verbindung mit einer Maske eine durch Reflektionshöfe verfälschte Codierung entstehen läßt.

Eine demgegenüber erleichterte Anwendung der Erfindung ergibt sich aus den Merkmalen des Anspruches 3.

Hierbei entfällt eine Maske, wobei ebenfalls die Markierungen der Codierung scharf umrandet ausfallen und sich daher u.a. auf kleinen Flächen in großer Anzahl anbringen lassen.

Mit den Merkmalen des Anspruches 4 entsteht eine aus mehreren Schichten zusammengesetzte Kunststoffkarte mit einem Inlet, in dem die strahlungsempfindliche Schicht vorhanden ist. In diesem Fall ergibt sich der Vorteil, daß die üblichen, strahlungsempfindlichen Schichten ohne wesentliche Änderungen in der erfindungsgemäßen Karte verwendet werden können.

Mit den Merkmalen des Anspruches 5 läßt sich das Inlet außer für die strahlungsempfindliche Schicht auch noch für andere Zwecke, z.B. zur Wiedergabe sichtbarer Informationen durch Bedruckung verwenden.

Die Einzelheiten, weiteren Merkmale und andere Vorteile der Erfindung ergeben sich aus der nachfolgenden Beschreibung einer Ausführungsform anhand der Figuren in der Zeichnung; es zeigen

Figur 1    in Seitenansicht die verschiedenen Ebenen einer Ausweiskarte gemäß der Erfindung vor ihrer Fertigstellung, d.h. in auseinandergezogener Darstellung der die Karte bildenden Ausschnitte,

Figur 2    die fertige Ausweiskarte, an der schematisch die Wirkung ihrer Bestrahlung erkennbar gemacht worden ist,

Figur 3    eine Draufsicht auf die in den Figuren 1
und 2 wiedergegebene Ausweiskarte und

Figur 4    eine abgeänderte Ausführungsform der Erfindung in der Figur 2 entsprechender
Darstellung.

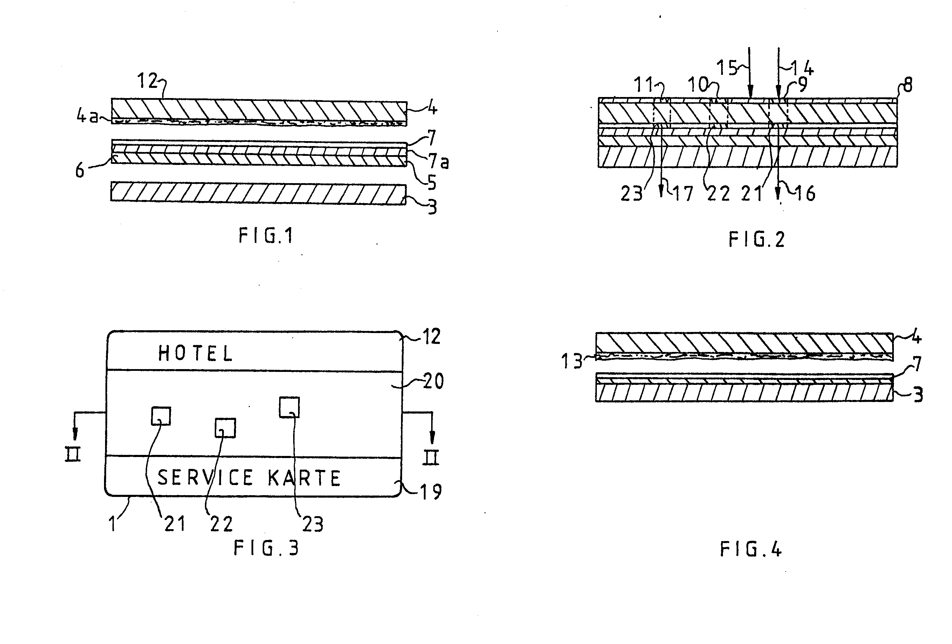

Gemäß der Darstellung der Figur 2 besteht die in Figur
3 allgemein mit 1 bezeichnete Ausweiskarte aus mehreren Teilen. Zwei deckungsgleiche Kunststoffolienabschnitte 3 und 4 sind kontinuierlich, d.h. weder perforiert noch markiert, sowie außerdem transparent
oder einseitig für sichtbares Licht undurchlässig und
infrarot-durchlässig beschichtet, was bei 4a angedeutet ist. Die Folienabschnitte können daher u.a. von
einem technischen Infrarotstrahler durchstrahlt
werden. Die beiden Kunststoffolienabschnitte 3 und 4
bzw. 4a bilden zusammen das Overlay, welches einen
weiteren Kunststoffolienausschnitt 5 auf beiden Seiten überdeckt, der das sogenannte Inlet bildet.
Hierbei handelt es sich um einen Träger, der auf
der mit 6 bezeichenten und dem Kunststoffabschnitt 4
des Overlays zugeordneten Seite eine Schicht 7 aus
einer strahlungsempfindlichen Schicht trägt. Diese
ist mit Hilfe einer Haftschicht 7a auf dem Film 5
befestigt.

Durch die örtliche Anwendung von Druck und Hitze
ist das in Figur 1 wiedergegebene und vorstehend
erläuterte Laminat fertiggestellt. Bei 8 ist schematisch eine Maske wiedergegeben, welche z.B. ihrerseits aus einem Folienabschnitt besteht, der als

Positiv die mit 9 bis 11 bezeichneten Codierungen wiedergibt. Die Maske 8 wird auf die Außenseite 12 des Kunststoffolienausschnittes 4 aufgelegt und dann der kurzzeitigen Belichtung durch einen flächenförmigen Temperaturstrahler ausgesetzt, dessen Strahlungsschwerpunkt in der Zeichnung so angenommen ist, daß die Strahlen etwa parallel verlaufen. Einer der mit 14 in Figur 2 schematisch wiedergegebenen Strahlen trifft auf eine Schwärzung der Maske 8 und kann daher nicht die durch die Strichpunktierung wiedergegebene Fläche der strahlungsempfindlichen Schicht 4a erreichen, die deshalb von den Strahlen nicht verändert wird. Ebenso verhalten sich die bei 10 und 11 bezeichneten weiteren Schwärzungen des Positivs. Dagegen vermögen andere Strahlen, von denen einer mit 15 bezeichnet ist, die Maske zu durchstrahlen, weil sie auf eine nicht geschwärzte Fläche auftreffen. Sie verändern die strahlungsempfindliche Schicht auf dem Träger dergestalt, daß sie für weitere Infrarotstrahlen undurchlässig wird.

Bei 16 und 17 sind Strahlen angedeutet, welche die Karte an den von den Schwärzungen der Maske auf der Schicht 7 bewirkten Markierungen 21 bis 22 durchdringen, wenn die Karte in einem Schloß mit einem Infrarotstrahler beleuchtet wird. Diese Strahlen treffen auf einen Empfänger und werden von einer eingebauten elektronischen Schaltung aufgenommen, welche den Code entschlüsselt und mit einem gespeicherten Codewort vergleicht. Stimmt das entschlüsselte Codewort mit dem gespeicherten Codewort überein, so wird das Schloß entsperrt, das andernfalls zugehalten wird.

Wie die Figur 3 zeigt, besteht die Codierung aus einer Vielzahl von Markierungen. Gleichwohl braucht nur ein geringer Teil 20 der Ausweiskarte für die Wiedergabe des Codes vorgesehen zu werden. Daher braucht die strahlungsempfindliche Schicht nicht die gesamte Fläche des Inlets auszumachen, sondern kann große Flächenbereiche freilassen, die beispielsweise für eine Bedruckung zur Verfügung stehen. Das ist schematisch bei 18 und 19 in Figur 3 gezeichnet.

Abweichend hiervon besteht die Ausweiskarte in dem in Figur 4 dargestellten Ausführungsbeispiel aus lediglich zwei Folienabschnitten 3 und 4, die zu einem Laminat verbunden sind. Dann befindet sich die strahlungsempfindliche Schicht 7 auf der Folie 3 oder auf der Innenseite 13 der Folie 4, wobei immer die gegenüber der Schicht 7 liegende Folie 3 oder 4 von der Innenseite 13 für sichtbares Licht undurchlässig und Infrarotlicht durchlässig ist. Sie kann in diesem Fall vollflächig oder wie beschrieben nur auf einer Teilfläche angebracht sein. Die Codierung läßt sich auch ohne Maske mit einer punktförmigen Strahlung auf der empfindlichen Schicht anbringen, welche jeweils eine Markierung bewirken. In diesem Fall ist die Codierung in der Karte ausgebildet.

Bei Verwendung einer Maske 8 läßt sich die Codierung sowohl als Positiv wie auch als Negativ je nach Ausbildung der Maske in der Karte verwirklichen.

Zum Auslesen der Codierung verwendet man eine Schicht, welche im Bereich zwischen ca. 900 bis 950 $\mu$m, also im Infrarotbereich durchdringlich ist. Die strahlungsempfindliche Schicht 7 ist dagegen im UV-Bereich für Strahlungen von etwa 400 $\mu$m empfänglich, d.h. diese Strahlung durchdringt die infrarotdurchlässige Schicht 4a und markiert die strahlungsempfindliche Schicht 7. In dieser Schicht läßt sich Silberjodit verwenden.

In einer unmittelbar auf die Markierung dieser Schicht folgenden Temperaturbehandlung zwischen 70 bis 180 ° C wird die strahlungsempfindliche Schicht fixiert und dadurch für weitere Markierungen unempfindlich gemacht.

Patentansprüche:

1. Ausweiskarte mit Codierung, die aus einer Mehrzahl von Markierungen besteht, welche bei Infrarotbetrahlung auf einem Infrarotempfäner erscheinen, dadurch gekennzeichnet, daß ein kontinuierlicher und transparenter Kunststoffolienausschnitt wenigstens auf einem Teil seiner Oberfläche eine für sichtbares Licht undurchlässige und für infrarotes Licht durchlässige Schicht (4a) trägt und mit einem Träger (5) ein Laminat bildet, welches auf seiner Innenseite eine von der für Infrarotlicht durchlässigen Schicht überdeckte strahlungsempfindliche Schicht (7) trägt, auf der die Markierungen (21 bis 23) durch Bestrahlung des Kunststoffolienausschnittes (3, 4) als Negativ oder Positiv erscheinen.

2. Ausweiskarte nach Anspruch 1, dadurch gekennzeichnet, daß die Markierungen (21 bis 23) als Negativ oder Positiv auf einer Maske (8) angebracht sind und bei der Abdeckung des Kunststoffolienausschnittes (3, 4) mit der Maske (8) im wesentlichen verzeichnungsfrei auf dem Träger der strahlungsempfindlichen Schicht (7) übertragbar sind.

3. Ausweiskarte nach Anspruch 1,
   d a d u r c h   g e k e n n z e i c h n e t,
   daß der Kunststoffolienabschnitt (3, 4) zur
   im wesentlichen verzeichnungsfreien Wiedergabe der Markierungen (21 bis 23) auf der
   strahlungsempfindlichen Schicht (7) entspiegelt ist.

4. Ausweiskarte nach einem der Ansprüche 1 bis 3,
   d a d u r c h   g e k e n n z e i c h n e t,
   daß die auf einer Mehrzahl von Punktstrahlern
   wiedergegebenen Markierungen punktförmig durch
   den transparenten Kunststoffolienabschnitt
   (3, 4) auf die strahlungsempfindliche Schicht
   (7) übertragbar sind.

5. Ausweiskarte nach einem der Ansprüche 1 bis 4,
   d a d u r c h   g e k e n n z e i c h n e t,
   daß der Kunststoffolienabschnitt (4) zusammen
   mit einem weiteren Kunststoffolienabschnitt (3)
   und in der Beschichtung (4a) das Overlay eines
   Laminates (1) bildet, dessen Inlet (5) ganz
   oder zum Teil aus einem Träger besteht, der
   die strahlungsempfindliche Schicht (7) trägt.

6. Ausweiskarte nach einem der Ansprüche 1 bis 5,
   d a d u r c h   g e k e n n z e i c h n e t,
   daß der Träger bzw. die strahlungsempfindliche
   Schicht (7) nur auf einer Teilfläche (20) der
   Gesamtoberfläche (18-20) des Lamiantes (1)
   angebracht ist.

7. Ausweiskarte nach einem der Ansprüche 1 bis 5, d a d u r c h   g e k e n n z e i c h n e t, daß die für infrarotes Licht durchlässige Schicht (4a) für Strahlungen im Bereich zwischen ca. 900 bis 950 µm durchdringlich ist.

8. Ausweiskarte nach einem der Ansprüche 1 bis 7, d a d u r c h   g e k e n n z e i c h n e t, daß die strahlungsempfindliche Schicht (7) mit Strahlungen im ultravioletten Bereich bei ca. 400 µm markierbar ist.

9. Ausweiskarte nach einem der Ansprüche 1 bis 8, d a d u r c h   g e k e n n z e i c h n e t, daß die strahlungsempfindliche Schicht (7) nach ihrer Markierung einer Temperaturbehandlung zwischen 70 bis 180 ° C zur Fixierung der Markierungen unterzogen ist.

FIG.1

FIG.2

HOTEL

SERVICE KARTE

FIG.3

FIG.4

1/1

0190387